# EUROPÄISCHE PATENTSCHRIFT

(11) **EP 1 707 018 B1**
(45) Veröffentlichungstag und Bekanntmachung des Hinweises auf die Patenterteilung: **21.05.2008**
(21) Anmeldenummer: 05701486.2
(22) Anmeldetag: 11.01.2005
(51) Int. Cl.: H04Q 3/00, H04M 7/00, H04M 3/42

(54) **ADAPTEREINHEIT**
ADAPTER UNIT
UNITE D'ADAPTATEUR

(30) Priorität: 19.01.2004 DE 102004002680
(43) Veröffentlichungstag der Anmeldung: 04.10.2006
(73) Patentinhaber: Siemens Enterprise Communications GmbH & Co. KG, 81379 München (DE)
(72) Erfinder: SCHAADE, Stephan, 86807 Buchloe (DE); WILLE, Klaus, 81679 München (DE)
(86) Internationale Anmeldenummer: PCT/EP2005/050097
(87) Internationale Veröffentlichungsnummer: WO 2005/069644

(56) Entgegenhaltungen:
- EP-A- 1 037 429
- WO-A-00/33519
- WO-A-01/06740
- US-A1- 2004 223 450

## Beschreibung

Die Erfindung betrifft eine Einheit für den Betrieb einer Vermittlungsstellenleitung eines öffentlichen Telekommunikationsnetzes an einer Telekommunikationsanlage. Die Einheit enthält eine Kanal-Sende-/Empfangseinheit, die Signalisierungsdaten zu einer Vermittlungsstelle eines durchschaltevermittelten Telekommunikationsnetzes sendet und die Signalisierungsdaten von der Vermittlungsstelle empfängt. Die Signalisierungsdaten erfüllen bspw. das Protokoll DSS1 (Digital Signalling Systems No. 1) der ITU-T (International Telecommunication Union - Telecommunication Standardization Sector).

Aus der WO 01/06740 A2 ist ein Filialsystem bekannt, welches einen Einsatz einer Kommunikationsanlage bzw. PBX in der Filiale zu erübrigen vermag. Die dortige Offenbarung sieht keine Weiterleitung von Signalisierungsdaten im Sinne einer Relaisfunktion an eine zentrale Kommunikationsanlage vor. Das offenbarte Filialsystem verfügt über Mittel, welche direkt mit einem verbundenen durchschaltevermittelnden Telekommunikationsnetz zusammenarbeiten und auf diese Weise eine volle Funktionalität einer Telekommunikationsanlage einnehmen, insbesondere deren Vermittlungsleistung.

An einem öffentlichen Telekommunikationsnetz sind verschiedene private Teilnehmer über Einzelanschlüsse oder Telekommunikationsanlagen angeschlossen. Vermittlungsstellen des öffentlichen Telekommunikationsnetzes vermitteln Verbindungen abhängig von den Rufnummern und überwachen die Vergebührung und die Nutzung von Leistungsmerkmalen.

Die Telekommunikationsanlage dient dagegen dem Betreiben eines privaten Telekommunikationsnetzes, z.B. eines Firmentelefonnetzes. Bspw. ist die Telekommunikationsanlage eine Anlage vom Typ HiPath 3000 oder HiPath 4000 der Firma Siemens AG. An eine Telekommunikationsanlage werden eine Vielzahl von Teilnehmer angeschlossen, deren Rufnummern und Leistungsmerkmale über die Telekommunikationsanlage vorgegeben werden. Insbesondere dient die Telekommunikationsanlage zum Vermitteln von Verbindungen zwischen den Endgeräten des privaten Telekommunikationsnetzes bzw. zum Vermitteln von Verbindungen zu oder von einem öffentlichen Telekommunikationsnetz bzw. Telefonnetz.

Vorstellbar ist eine Lösung bei der die Einheit eine Adaptereinheit ist, die die folgenden Baugruppen für eine Normalbetriebsart enthält:
- die Kanal-Sende-/Empfangseinheit,
- eine Datenpaket-Sende-/Empfangseinheit, die Datenpakete in ein Datenpaketübertragungsnetz sendet und die Datenpakete aus dem Datenpaketübertragungsnetz empfängt, und
- eine Dateneinfüge-/Datenentnahmeeinheit, die von der Kanal-empfangseinheit kommende Signalisierungsdaten in Datenpakete einfügt und an die Datenpaketsendeeinheit weitergibt und die aus von der Datenpaketempfangseinheit empfangenen Datenpaketen Signalisierungsdaten entnimmt und an die Kanalsendeeinheit weitergibt.

Durch eine solche Adaptereinheit kann eine zu einer Filiale führende Vermittlungsstellenleitung mit kleinem schaltungstechnischen Aufwand an eine entfernte zentrale Telekommunikationsanlage angeschlossen werden, insbesondere ist in der Filiale keine eigene Telekommunikationsanlage erforderlich. Trotzdem können Vorteile genutzt werden, wie sie sonst nur mit Hilfe einer eigenen Telekommunikationsanlage in der Filiale erbracht werden.

Jedoch muss auch gewährleistet sein, dass Endgeräte der Filiale auch bei Ausfall der zentralen Telekommunikationsanlage oder bei Ausfall des Datenpaketübertragungsnetzes betriebsbereit sind.

Es ist Aufgabe der Erfindung eine einfach aufgebaute und störsicher arbeitende Adaptereinheit anzugeben.

Die auf die Einheit bezogene Aufgabe wird durch eine Adaptereinheit mit den im Patentanspruch 1 angegebenen Merkmalen gelöst. Weiterbildungen sind in den Unteransprüchen angegeben.

Die erfindungsgemäße Adaptereinheit enthält:
- eine Kanal-Sende-/Empfangseinheit, die Signalisierungsdaten zu einer Vermittlungsstelle eines durchschaltevermittelten Telekommunikationsnetzes sendet und die Signalisierungsdaten von der Vermittlungsstelle empfängt,
- eine Datenpaket-Sende-/Empfangseinheit, die zumindest in einer Normalbetriebsart Datenpakete in ein Datenpaketübertragungsnetz sendet und die Datenpakete aus dem Datenpaketübertragungsnetz empfängt,
- eine Dateneinfüge-/Datenentnahmeeinheit, die zumindest in der Normalbetriebsart von der Kanal-Empfangseinheit kommende Signalisierungsdaten in Datenpakete einfügt und an die Datenpaket-Sendeeinheit weitergibt und die aus von der Datenpaket-Empfangseinheit empfangenen Datenpaketen Signalisierungsdaten entnimmt und an die Kanal-Sendeeinheit weitergibt, und
- eine Betriebsartumschalteinheit, die bei einer Störung auf der Seite des Datenpaketübertragungsnetzes oder bei Störungen in einer an dem Datenpaketübertragungsnetz betriebenen Telekommunikationsanlage in eine Notbetriebsart umschaltet, in der eine Telekommunikation über das durchschaltevermittelte Telekommunikationsnetz gewährleistet ist.

Somit kann auf einfach Art und Weise auch bei Störungen eines Datenpaketübertragungsnetzes zu einer zentralen Telekommunikationsanlage oder bei einer Störung der zentralen Telekommunikationsanlage ein Telefonbetrieb in der Filiale ermöglicht werden.

Bei einer ersten alternativen Weiterbildung veranlasst die Betriebsartumschalteinheit in der Notbetriebsart die Weitergabe der Signalisierungsdaten an eine andere Telekommunikationsanlage als in der Normalbetriebsart. Umgekehrt werden in der Notbetriebsart von der anderen Telekommunikationsanlage kommende Signalisierungsdaten über die Kanal-Sendeeinheit gesendet. Die Funktionen der anderen Telekommunikationsanlage sind im Vergleich zu der in der Normalbetriebsart genutzten zentralen Telekommunikationsanlage vorzugsweise erheblich eingeschränkt, so dass der schaltungstechnische und administrative Aufwand für die in der Notbetriebsart genutzte Telekommunikationsanlage vertretbar ist. Beispielsweise unterstützt die in der Notbetriebsart genutzte Telekommunikationsanlage nur wenige Endgeräte, insbesondere weniger als 16 Endgeräte. Auch enthält diese Telekommunikationsanlage keine redundant ausgeführten Baugruppen.

Die Funktionen der in der Notbetriebsart genutzten Telekommunikationsanlage werden bei einer Weiterbildung in einem Telefon erbracht, insbesondere in einem IP-Telefon. Baugruppen und Software lassen sich im IP-Telefon sowohl zum Erbringen der Funktion der Not-Telekommunikationsanlage als auch zum Erbringen der Funktionen des IP-Telefons beim Telefonieren in beiden Betriebsarten verwenden.

Bei einer sehr einfachen zweiten alternativen Weiterbildung veranlasst die Betriebsartumschalteinheit in der Notbetriebsart die Weitergabe der Signalisierungsdaten an ein Teilnehmer-Endgerät. Umgekehrt werden in der Notbetriebsart von dem Teilnehmer-Endgerät kommende Signalisierungsdaten über die Kanal-Sendeeinheit gesendet. Diese Weiterbildung wird insbesondere eingesetzt, wenn die Vermittlungsstellenleitung ein Mehrgeräteanschluss ist.

Bei einer dritten alternativen Weiterbildung enthält die Adaptereinheit eine Protokollumsetzungseinheit die in der Notbetriebsart von der Betriebsartumschalteinheit veranlasst wird, eine Protokollumsetzung der Signalisierungsdaten in ein Signalisierungsprotokoll für ein Datenpaketübertragungsnetz und vorzugsweise auch in umkehrter Richtung auszuführen. Die Adaptereinheit enthält in der dritten alternativen Weiterbildung außerdem eine Netzzugangseinheit, die durch die Betriebsartumschalteinheit in der Notbetriebsart veranlasst wird, Netzzugangsfunktionen für Endgeräte eines Datenpaketübertragungsnetzes auszuführen, insbesondere eine Gatekeeperfunktion gemäß einem Protokoll der H.323-Protokollfamilie der ITU-T (International Telecommunication Union - Telecommunication Standardization Sector) oder eine SIP-Registrarfunktion gemäß SIP-Protokoll (Session Initiation Protocol) der IETF (Internet Engineering Task Force) oder einem darauf aufbauenden Protokoll. Die Telefone der Filiale registrieren sich in der Notbetriebsart bei der Adaptereinheit.

Auch bei einer vierten alternativen Weiterbildung enthält die Adaptereinheit eine Protokollumsetzungseinheit, nämlich eine sogenannte Proxyeinheit, die in der Notbetriebsart von der Betriebsartumschalteinheit veranlasst wird, eine Protokollumsetzung der Signalisierungsdaten gemäß bspw. DSS1 in ein Signalisierungsprotokoll für ein Datenpaketübertragungsnetz und vorzugsweise auch in umkehrter Richtung auszuführen. Bei der vierten Weiterbildung enthält die Adaptereinheit auch eine Endgeräteeinheit, die durch die Betriebsartumschalteinheit in der Notbetriebsart veranlasst wird, die Funktion eines Endgerätes in Endgerät-Endgerät-Verbindungen eines Datenpaketübertragungsnetzes auszuführen, insbesondere in Peer-to-Peer-Verbindungen. Damit muss die Adaptereinheit keine zentrale Registrierfunktion gleichzeitig für alle Telefone der Filiale erbringen.

Bei anderen alternativen Weiterbildungen werden andere Maßnahmen ergriffen, um auch bei einer Störung den Telefonbetrieb in einer Filiale aufrechtzuerhalten, in der die erfindungsgemäße Adaptereinheit installiert ist.

Im Folgenden wird die Erfindung an Hand der beiliegenden Zeichnungen erläutert. Darin zeigen:
- Figur 1: die Normalbetriebsart eines privaten Telekommunikationsnetzes in dem Sprachdaten auch über das Internet übertragen werden, und
- Figur 2: Protokollstapel für die Normalbetriebsart in einer Adaptereinheit und in einer zentralen Telekommunikationsanlage des privaten Telekommunikationsnetzes, und
- Figuren 3 bis 6: vier Notbetriebsarten des privaten Telekommunikationsnetzes.

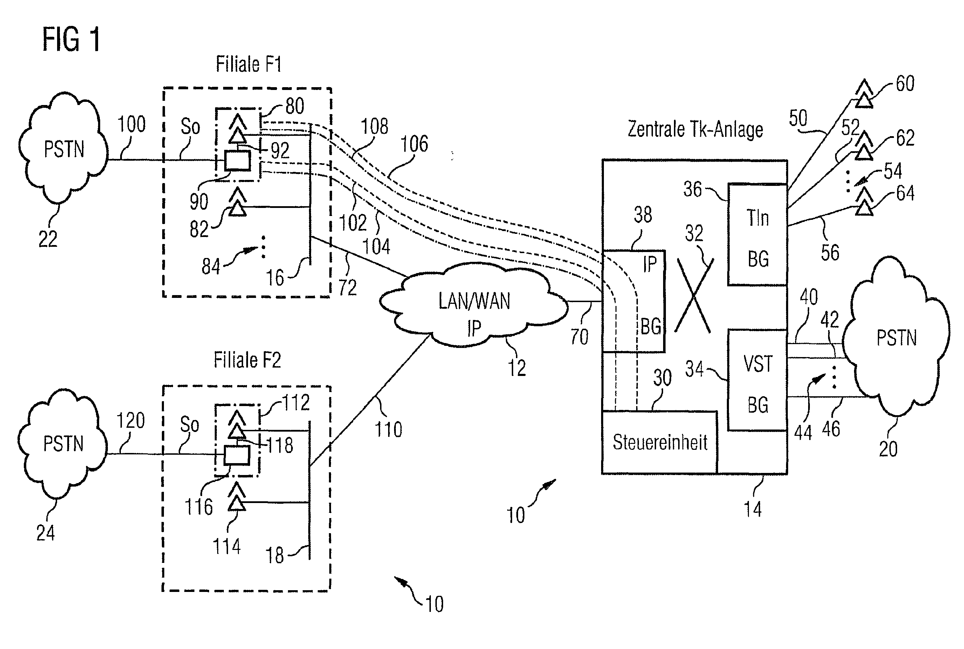

Figur 1 zeigt die Normalbetriebsart eines privaten Telekommunikationsnetzes 10 in dem Sprachdaten auch über das Internet 12 übertragen werden. Das Telekommunikationsnetz 10 enthält eine zentrale Telekommunikationsanlage 14 und bspw. zwei Filial-Datenpaketübertragungsnetze 16 und 18 in einer Filiale F1 bzw. F2. Die Telekommunikationsanlage 14 vermittelt Telefon-Verbindungen oder Bildtelefon-Verbindungen zwischen den Endgeräten des privaten Telekommunikationsnetzes 10 und/oder zwischen diesen Endgeräten und Endgeräten an einem öffentlichen durchschaltevermittelten Telekommunikationsnetz (PSTN - Public Switched Telecommunication Network), von dem im Figur 1 drei Ortsnetze 20, 22 und 24 dargestellt sind. Im Ausführungsbeispiel gehören die Ortsnetze 20 bis 24 dem gleichen Netzbetreiber. Bei anderen Ausführungsbeispielen gehören die Ortsnetze 20 bis 24 verschiedenen Netzbetreibern. Bei einem anderen Ausführungsbeispiel sind die Telekommunikationsanlage 14 und die Adaptereinheit 90 im gleichen Ortsnetz an verschiedenen Vermittlungsstellen oder an verschiedenen Baugruppen einer Vermittlungsstelle angeschlossen.

Im Internet 12 werden die Daten in Datenpaketen gemäß Internetprotokoll übertragen. Jedes Datenpaket enthält einen Datenkopf mit einer Zieladresse und mit einer Absenderadresse. In einem Datenrumpf sind Nutzdaten enthalten, bspw. Sprachdaten oder Signalisierungsdaten. Auf mindestens einer unteren Protokollebene werden die Datenpakete verbindungslos übertragen, d.h. ohne Verbindungsaufbauphase und Verbindungsabbauphase. Das Internet 12 enthält eine Vielzahl lokaler Datenpaketübertragungsnetze LAN (Lokal Area Network) und Weitverkehrsübertragungsnetze WAN (Wide Area Network).

Die Telekommunikationsanlage 14 ist bspw. vom Typ HiPath 4000 der Firma Siemens AG und enthält:
- eine Steuereinheit 30,
- ein Koppelfeld 32,
- mindestens eine Vermittlungsstellenbaugruppe 34,
- mindestens eine Teilnehmeranschlussbaugruppe 36,
- und mindestens eine IP-Baugruppe 38.

Die Steuereinheit 30 steuert u.a. Vermittlungsvorgänge in der Telekommunikationsanlage 14, prüft die Nutzung von Leistungs= merkmalen durch die Teilnehmer des privaten Telekommunikationsnetzes 10 und vermerkt Vergebührungsdaten für die interne Vergebührung innerhalb des privaten Telekommunikationsnetzes 10. Bspw. enthält die Steuereinheit einen oder mehrere Prozessoren.

Das Koppelfeld 32 wird von der Steuereinheit 30 gesteuert und dient der Vermittlung von Gesprächsdaten von bzw. zu der Vermittlungsstellenbaugruppe 34, der Teilnehmeranschlussbaugruppe 36 oder der IP-Baugruppe 38. Die Vermittlung im Koppelnetz 32 erfolgt bspw. durch das Verschalten von Zeitschlitzen.

An die Vermittlungsstellenbaugruppe 34 ist eine Vermittlungsstellenleitung 40 oder sind mehrere Vermittlungsstellenleitungen 40 bis 46 angeschlossen, deren anderes Ende an einer nicht dargestellten Vermittlungsstelle des Ortsnetzes 20 angeschlossen ist. Bspw. werden im Zeitmultiplex je Vermittlungsstellenleitung die Gesprächsdaten in bis zu 30 Nutzkanälen und einem Signalisierungskanal gemäß ISDN-Protokoll (Integrated Services Digital Network) übertragen. Die Vermittlungsstellenbaugruppe 34 bearbeitet aus dem Ortsnetz 20 kommende Signalisierungsnachrichten gemäß ISDN-Protokoll und sendet Signalisierungsnachrichten gemäß ISDN-Protokoll in das Ortsnetz 20.

An die Teilnehmeranschlussbaugruppe 36 sind über Anschlussleitungen 50 bis 56 ein Vielzahl von Endgeräten 60 bis 64 angeschlossen, bspw. Endgeräte vom Typ Optiset der Firma Siemens AG. Die Sprachdaten zwischen den Endgeräten 60 bis 64 und der Teilnehmerbaugruppe 36 werden nur in Sprachkanälen im Zeitmultiplex und nicht in Datenpaketen übertragen. Die Teilnehmerbaugruppe 36 erzeugt Signalisierungsnachrichten gemäß einem proprietären Stimulusprotokoll, bspw. gemäß dem Protokoll CorNet TS (Corporate Network Telephony Support). Die Endgeräte 60 bis 64 werden von Mitarbeitern der Firma benutzt, die das private Telekommunikationsnetz 10 betreibt.

Die IP-Baugruppe 38 ist über eine Leitung 70 mit dem Internet 12 verbunden. Mit Hilfe der IP-Baugruppe 38 werden Datenpakete in das Internet 12 gesendet und aus dem Internet 12 empfangen. Die IP-Baugruppe 38 bearbeitet Signalisierungsdaten gemäß IP-Protokoll und TCP-Protokoll (Transmission Control Protocol) und führt auf höheren Protokollebenen bei einer Alternative außerdem insbesondere zum Vorbereiten einer Sprachübertragung eine IP-Signalisierung durch, bspw. gemäß SIP (Session Initiation Protokoll), das von der IETF (Internet Engineering Task Force) festgelegt worden ist, oder gemäß einem ITU-T Protokoll der H.323 - Protokollfamilie.

Außerdem werden in der IP-Baugruppe 38 aus dem Koppelfeld 32 kommende Sprachdaten aus durchschaltevermittelten Übertragungskanälen entnommen und in Datenpakete eingefügt, die dann über das Internet 12 übertragen werden. Umgekehrt werden in der IP-Baugruppe 38 aus dem Internet 12 kommende Sprachdaten aus Datenpaketen entnommen und in Übertragungskanälen des Koppelfeldes 32 weiter vermittelt.

An das IP-Datenpaketübertragungsnetz 16 in der Filiale F1 sind angeschlossen:
- eine Leitung 72 zum Internet 12, und
- IP-Telefone 80 bis 84, bspw. weniger als zehn IP-Telefone, z.B. vom Typ Optipoint der Firma Siemens AG.

Das IP-Telefon 80 enthält bspw. als Steckkarte einen S₀-Adapter 90, der einerseits mit dem Datenpaketübertragungsnetz 16 verbunden ist, siehe Verbindung 92, und der andererseits mit einer Vermittlungsstellenanschlussleitung bzw. kurz einer Vermittlungsstellenleitung 100 verbunden ist, die zu einer nicht dargestellten Vermittlungsstelle des Ortsnetzes 22 führt. Auf der Vermittlungsstellenleitung 100 wird gemäß ISDN-Protokoll für die Schnittstelle S₀ signalisiert.

Auf der Vermittlungsstellenleitung 100 eintreffende Signalisierungsdaten werden im S₀-Adapter 90 ohne protokollgemäße Bearbeitung in Datenpakete verpackt und über das Internet 12 getunnelt, siehe den durch eine gestrichelte Linie angedeuteten Signalisierungsweg 102 der Signalisierungsdaten von dem S₀-Adapter 90 über das Internet 12 und die IP-Baugruppe 38 zur Steuereinheit 14. Die Steuereinheit bearbeitet die Signalisierungsdaten auf gleiche Weise, wie von der Vermittlungsstellenbaugruppe 34 kommende Signalisierungsdaten. Dabei werden durch die Steuereinheit 30 Steuervorgänge durchgeführt und die Signalisierungsdaten werden gemäß ISDN-Protokoll protokollgemäß beantwortet. Die Antwort-Signalisierungsdaten werden zur IP-Baugruppe 38 geleitet und dort in Datenpakete verpackt und zum S₀-Adapter 90 über das Internet 12 zurückgetunnelt, siehe gestrichelte Signalisierungsweg 102.

Die Sprachdaten werden aus dem B-Kanal (B1, B2) der Vermittlungsstellenleitung 100 entnommen und bspw. über das Internet 12 zur IP-Baugruppe 38 übertragen, siehe Sprachdatenweg 104. Zur Übertragung der Sprachdaten wird bspw. ein Echtzeitprotokoll genutzt, z.B. das RTP (Real Time Protocol) und das Protokoll UDP (User Datagram Protocol), das von der IETF festgelegt worden ist. Im S₀-Adapter 90 wird bspw. eine Sprachkompression gemäß ITU-T-Standard G.723 bzw. G.729 in Richtung Internet 12 bzw. eine Sprachdekompression in Richtung Vermittlungsstellenleitung 100 durchgeführt. Bezüglich der Sprachdaten wird also nicht getunnelt.

Im Ausführungsbeispiel soll gemäß der über die Vermittlungsstellenleitung 100 eintreffenden Signalisierungsdaten eine Telefonverbindung aus dem Ortsnetz 22 zum IP-Telefon 80 aufgebaut werden. Deshalb signalisiert die Steuereinheit 30 dem IP-Telefon 80 den ankommenden Ruf mit Hilfe der IP-Baugruppe 38 über das Internet 12, siehe Signalisierungsweg 106. Zum IP-Telefon 80 wird bspw. ein proprietäres Stimulusprotokoll zur Signalisierung verwendet, z.B. das siemensinterne Protokoll CorNet TS (Corporate Network - Telephony Support) getunnelt über das unten näher erläuterte proprietäre Protokoll CorNet TC (Corporate Network - Tele Commuting) und TCP/IP. Die Protokollnachrichten dieses Protokolls werden über das Internet 12 getunnelt und betreffen einfache Signalisierungsvorgänge wie "Taste x gedrückt" oder "LED x ein bzw. aus".

Zum Vorbereiten der Übertragung der Sprachdaten lassen sich bspw. das Protokoll SIP (Session Initiation Protocol) oder eine Protokoll der H.323-Protokollfamilie verwenden. Zur Signalisierung auf dem Signalisierungsweg 106 wird alternativ an Stelle des Protokolls CorNet TS bspw. das Protokoll SIP oder ein Signalisierungsprotokoll gemäß H.323-Protokollfamilie genutzt.

Hat der das IP-Telefon 80 betätigende Teilnehmer das ankommende Gespräch angenommen, so werden bspw. auch die über den Sprachdatenweg 104 in der IP-Baugruppe 38 eingetroffene Sprachdaten über das Internet 12 von der IP-Baugruppe 38 zum IP-Telefon übertragen, siehe Sprachdatenweg 108 auf dem bspw. wieder ein Echtzeit-Übertragungsprotokoll ohne Tunneln verwendet wird. Spricht der das IP-Telefon 80 nutzende Teilnehmer, so werden die dabei erzeugten Sprachdaten in umgekehrter Richtung über die Sprachdatenwege 108 und 104 zum Adapter 90 geleitet, entpackt und in einem Zeitschlitz über die Vermittlungsstellenleitung 100 weitergeleitet.

Auch wenn das IP-Telefon 80 eine Verbindung in das Ortsnetz 22 aufbauen möchte, werden die Signalisierungswege 106 und 102 sowie die Sprachübertragungswege 108 und 104 benutzt. Dabei werden ISDN-Signalisierungsdaten von der Steuereinheit 30 erzeugt und über den Signalisierungsweg 102 zum S₀-Adapter 90 getunnelt und nach der Umwandlung zur Vermittlungsstelle des Ortsnetzes 22 gesendet. Die von der Vermittlungsstelle des Ortsnetzes 22 kommenden Antwort-Signalisierungsdaten werden dann vom S₀-Adapter 90 über das Internet 12 zur Steuereinheit 14 getunnelt.

Auf gleiche Weise wird vorgegangen, wenn an Stelle des IP-Telefons 80 das IP-Telefon 82 der Filiale F1 oder ein IP-Telefon 84 genutzt wird.

An das IP-Datenpaketübertragungsnetz 18 in der Filiale F2 sind angeschlossen:
- eine Leitung 110 zum Internet 12, und
- ein IP-Telefon 112 und ein IP-Telefon 114, bspw. IP-Telefone vom Typ Optipoint der Firma Siemens AG.

Das IP-Telefon 112 enthält bspw. als Steckkarte einen S₀-Adapter 116, der einerseits mit dem Datenpaketübertragungsnetz 18 verbunden ist, siehe Verbindung 118, und der andererseits mit einer Vermittlungsstellenleitung 120 verbunden ist, die zu einer nicht dargestellten Vermittlungsstelle des Ortsnetzes 24 führt. Auf der Vermittlungsstellenleitung 120 wird bspw. gemäß ISDN-Protokoll für die Schnittstelle S₀ signalisiert. Die oben für die Filiale F1 erläuterten Vorgänge gelten auch für die Filiale F2, wenn an Stelle des Ortsnetzes 22 das Ortsnetz 24 an einer Telefonverbindung beteiligt ist.

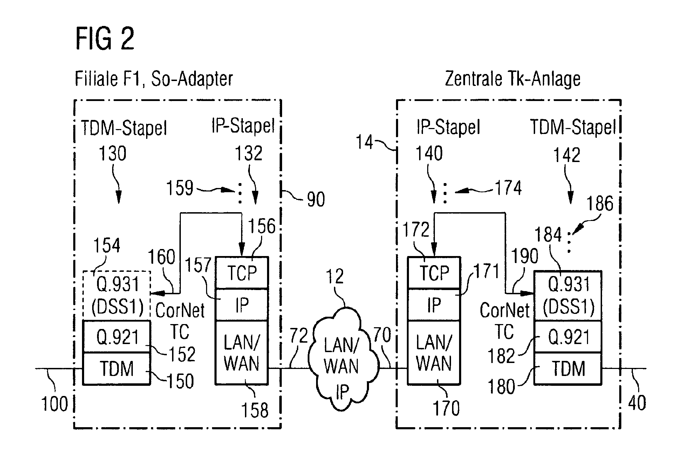

Figur 2 zeigt für die Normalbetriebsart zwei Protokollstapel 130 und 132 in der Adaptereinheit 90 und zwei Protokollstapel 140 und 142 in der zentralen Telekommunikationsanlage 14. Die Funktionen der zu den Protokollstapeln 130 bis 142 gehörenden Protokolle werden bspw. durch eine Schaltungsanordnung ohne Prozessor oder durch eine Schaltungsanordnung mit Prozessor erbracht, der Befehle ausführt, die in einer Speichereinheit gespeichert sind.

Der Protokollstapel 130 besitzt gemäß OSI-Modell (Open Systems Interconnection) als untere Protokollebene 150, d.h. als physikalische Schicht bzw. Bitübertragungsschicht, eine TDM-Schicht (Time Devision Multiplex), so dass die Signalisierungsdaten in einem Signalisierungskanal nach dem Zeitmultiplexverfahren übertragen werden. Die zweite Protokollebene 152, d.h. die Datenverbindungsschicht, des Protokollstapels 130 wird bspw. gemäß ITU-T-Standard Q.921 betrieben.

Während die Protokollebenen 150 und 152 im Adapter 90 vollständig bearbeitet werden, werden Signalisierungsnachrichten der dritten Protokollebene 154, d.h. der Netzwerkschicht, im Adapter 90 nur erkannt aber nicht bearbeitet. Die dritte Protokollebene betrifft die Signalisierung bspw. gemäß ISDN-Teilnehmerprotokoll DSS1 (Digital Signalling System No. 1), siehe Q.931 ff. der ITU-T. Die zu diesem Protokoll gehörenden Daten werden kopiert und über das Internet 12 getunnelt.

Zum Tunneln wird bspw. ein proprietäres Protokoll verwendet, z.B. das siemensinterne Protokoll CorNet TC (Corporate Network - Tele Commuting), das die folgenden Grundmeldungen kennt:
- "Log On" bzw. "Log Off" zum Signalisieren des Aufbaus bzw. des Abbaus einer Datenverbindung,
- "Keep Alive" zum Überwachen der Datenverbindung,
- eine Containermeldung, in der sich bspw. Signalisierungsnachrichten gemäß anderer proprietärer Protokolle oder auch die zu tunnelnden Signalisierungsnachrichten gemäß DSS1 transportieren lassen.

Aus vermittlungstechnischer Sicht gehört CorNet TC zur Verbindungsebene 2.

Im IP-Protokollstapel 132 wird in der vierten Protokollebene, d.h. in der Transportprotokollebene, bspw. das TCP-Protokoll (Transmission Control Protocol) genutzt. Darunter liegt in der dritten Protokollebene, d.h. in der Netzwerkprotokollebene, das Internetprotokoll IP. Die beiden unteren Protokollebenen im IP-Protokollstapel 132 sind zu einer Netzzugangsprotokollebene 158 zusammengefasst und stehen für ein LAN- bzw. WAN-Übertragungsprotokoll, bspw. ein Ethernetprotokoll. Höhere Protokollebenen 159 des IP-Protokollstapels 132 sind in Figur 2 durch Punkte angedeutet.

Das Tunneln der Signalisierungsdaten im Adapter 90 ist in Figur 2 durch einen Doppelpfeil 160 dargestellt und erfolgt sowohl in Richtung von der Vermittlungsstellenleitung 100 zur Leitung 72 als auch in umgekehrter Richtung von der Leitung 72 zur Vermittlungsstellenleitung 100. Die CorNet TC-Containermeldungen werden als IP-Datenpakete in das Internet 12 von dem Adapter 90 gesendet bzw. aus dem Internet 12 empfangen.

Im Ausführungsbeispiel werden die Funktionen des Protokollstapels 132 durch das IP-Telefon 80 erbracht, das auch für die IP-Telefonie die Funktionen eines solchen Protokollstapels 132 nutzt. Das Telefon 80 enthält ein internes Bussystem an dem eine S₀-Karte eingesteckt wird. Über das interne Bussystem werden ungetunnelte DSS1-Nachrichten zwischen der S₀-Karte und dem Telefon 80 ausgetauscht. Somit werden Software- und Hardware mehrfach genutzt und der zusätzliche schaltungstechnische und softwaretechnische Aufwand für den Adapter 90 ist gering.

Bei einem anderen Ausführungsbeispiel wird der S₀-Adapter 90 unabhängig von einem IP-Telefon realisiert und enthält in diesem Fall einen eigenen Anschluss an das Filial-Datenpaketübertragungsnetz 16. Auch die Funktionen beider Protokollstapel 130 und 132 werden bei dem alternativen Ausführungsbeispiel in dem S₀-Adapter 90 erbracht.

Figur 2 zeigt in ihrem rechten Teil die den Protokollstapeln 130, 132 entsprechenden Protokollstapel 140, 142. Der Protokollstapel 140 ist wie der Protokollstapel 132 aufgebaut und enthält:
- eine untere Netzzugangsprotokollebene 170, deren Funktionen bspw. durch die IP-Baugruppe 38 erbracht werden,
- eine darüber liegende dritte Protokollebene 171 zur Realisierung des IP-Protokolls,
- eine vierte Protokollebne 172 zur Realisierung eines Transportprotokolls, z.B. des TCP, wobei die Funktionen der Protokollebenen 171 und 172 bspw. ebenfalls durch die IP-Baugruppe 38 erbracht werden, und
- weitere höhere Protokollschichten 174, die durch Punkte angedeutet sind aber nicht näher erläutert werden.

Der Protokollstapel 142 ist ähnlich wie der Protokollstapel 130 aufgebaut, und enthält:
- eine untere Protokollebene 180, die gemäß einem Zeitmultiplexverfahren arbeitet,
- eine zweite Protokollebene, die bspw. gemäß ITU-T-Standard Q.921 arbeitet und eine Datenübertragungsverbindung zwischen der Vermittlungsstellen-Baugruppe 34 und der Vermittlungsstelle im Ortsnetz 20 herstellt,
- eine im Gegensatz zur Protokollebene 154 vollständig bearbeitete Signalisierungs-Protokollebene 184, die Funktionen des DSS1-Protokolls erbringt, und
- höhere Protokollebenen 186, die durch Punkte angedeutet sind, aber nicht näher erläutert werden.

Die Protokollebene 184 des Protokollstapels 142 wird sowohl zur Signalisierung Richtung Ortsnetz 20 als auch zur Weitergabe von durch das Internet 12 getunnelten Signalisierungsnachrichten an die Steuereinheit 30 bzw. zur Weitergabe von Signalisierungsnachrichten verwendet, die von der Steuereinheit 30 kommen und durch das Internet 12 getunnelt werden müssen, siehe Doppelpfeil 190.

In der Telekommunikationsanlage 14 werden die durch das Internet 12 getunnelten DSS1-Signaliseirungsnachrichten aus den CorNet TC-Containermeldungen entpackt und an die Steuereinheit 30 weitergegeben. Umgekehrt werden die über das Internet 12 zu tunnelnden DSS1-Signalisierungsnachrichten in CorNet TC-Container und anschließend in IP-Datenpakete eingefügt.

Wenn das Internet 12 oder die zentrale Telekommunikationsanlage 14 ausfällt, ist ohne die im folgenden erläuterten zusätzlichen Maßnahmen keine Steuerung der Telefone 80 bis 84, 112, 114 in den Filialen F1, F2 sowie der zu den Filialen F1, F2 führenden Vermittlungsleitungen 100, 120 möglich.

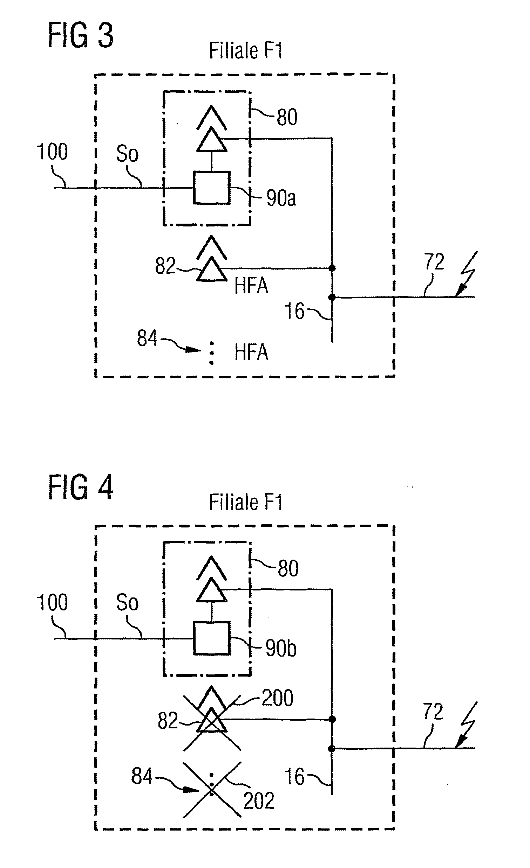

Figur 3 zeigt eine erste Variante einer Notbetriebsart, bei der die Funktionen der Adaptereinheit 90 durch eine Adaptereinheit 90a erbracht werden. Das IP-Telefon 80 erfasst den Ausfall des Internet 12 bzw. den Ausfall der Telekommunikationsanlage 14.

Das IP-Telefon 80 mit der S₀-Adaptereinheit 90a übernimmt darauf hin die Rolle einer kleinen Telekommunikationsanlage (PBX -Private Branch Exchange) mit den IP-Telefonen 80 bis 84 als Nebenstellenendgeräten. Das IP-Telefon 80 bedient die S₀-Schnittstelle der S₀-Adaptereinheit 90a wie eine kleine Telekommunikationsanlage mit einer S₀-ISDN-Amtsschnittstelle.

Die IP-Telefone 82, 84 erfassen ihrerseits den Ausfall und schalten auf eine Ersatz-IP-Adresse der Not-Telekommunikationsanlage um. Die IP-Telefone 82, 84 registrieren sich automatisch in der Notbetriebsart bei der kleinen Telekommunikationsanlage, die sich im IP-Telefon 80 bzw. in der S₀-Adaptereinheit 90a befindet. Damit können in der Notbetriebsart alle IP-Telefone 80, 82 und 84 als Nebenstellenteilnehmer der Not-Telekommunikatonsanlage über die Einheit aus IP-Telefon 80 und S₀-Adaptereinheit 90a kommende und gehende Amtsgespräche bzw. Vermittlungsstellengespräche führen.

Das IP-Telefon 80 und dessen S₀-Adaptereinheit 90a arbeiten in der Notbetriebsart gegenüber den IP-Telefonen 82, 84 wie die zentrale Telekommunikationsanlage 14. Im Ausführungsbeispiel ist die Telekommunikationsanlage 14 eine Telekommunikationsanlage vom Typ HiPath 4000 der Firma Siemens AG. Somit schalten die IP-Telefone 82, 84 als sogenannte HFA-IP-Telefone (HiPath Feature Access) von der zentralen Telekommunikationsanlage 14 um zu IP-Telefon 80 als Not-Telekommunikationsanlage. Beim Umschalten werden die Schnittstellenprotokolle beibehalten, insbesondere proprietäre Schnittstellenprotokolle wie das Protokoll CorNet TS oder das Protokoll CorNet IP.

Das IP-Telefon 80 selbst wird in der Notbetriebsart im Ausführungsbeispiel ebenfalls an der Not-Telekommunikationsanlage betrieben. Bei einem alternativen Ausführungsbeispiel wird das Telfon 80 in der Notbetriebsart wie ein Hauptanschlusstelefon betrieben, wobei sich die Not-Telekommunikationsanlage und das Telefon den S₀-Bus teilen.

Bei dem in Figur 3 dargestellten Ausführungsbeispiel werden in der Notbetriebsart keine DSS1 Signalisierungsnachrichten über ein IP-Netz getunnelt. Die DSS1 Signalisierungsnachrichten gelangen über ein internes Bussystem des IP-Telefons 80 zum IP-Telefon 80.

Figur 4 zeigt eine sehr einfache zweite Variante einer Notbetriebsart, bei der die Funktionen der Adaptereinheit 90 durch eine Adaptereinheit 90b erbracht werden. Das IP-Telefon 80 und die S₀-Adaptereinheit 90b arbeiten in der Notbetriebsart gemäß der zweiten Variante wie ein ISDN-Amtstelefon bzw. wie ein direkt an eine Vermittlungsstelle angeschlossenes ISDN-Telefon.

Das IP-Telefon 80 erfasst den Ausfall des Internets 12 oder der zentralen Telekommunikationsanlage 14. Daraufhin bedient das IP-Telefon 80 die S₀-Schnittstelle wie ein ISDN-Telefon direkt an einer Vermittlungsstelle. Damit kann das IP-Telefon 80 in der Notbetriebsart als ISDN-Telefon aus dem Ortsnetz 22 kommende und in das Ortsnetz 22 gehende Gespräche führen. Die anderen IP-Telefone 80, 82 können in der Notbetriebsart keine Gespräche führen, siehe Durchstreichungen 200 und 202 .

In der Notbetriebsart gemäß Figur 4 werden ebenfalls keine DSS1-Signalisierungsanachrichten über ein Datenpaketübertragungsnetz getunnelt. Die DSS1-Signalisierungsnachrichten werden über ein internes Bussystem des IP-Telefons zwischen S₀-Karte und Telfon 80 übertragen. Damit werden in der Notbetriebsart keine Funktionen des IP-Protokollstapels 132 erbracht.

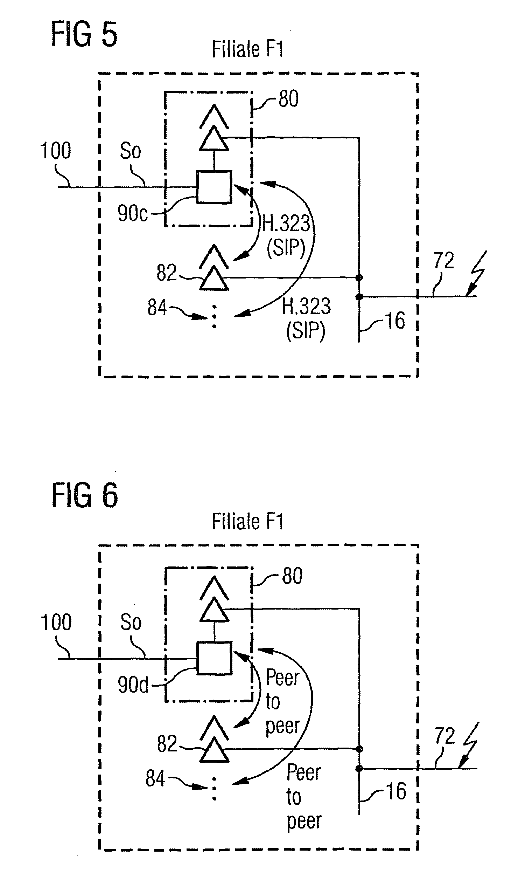

Figur 5 zeigt eine dritte Variante einer Notbetriebsart, bei der die Funktionen der Adaptereinheit 90 durch eine Adaptereinheit 90c erbracht werden. Gemäß der dritten Variante arbeitet die S₀-Adaptereinheit in der Notbetriebsart wie ein H.323/ISDN-Gateway oder bei einem alternativen Ausführungsbeispiel wie ein SIP/ISDN-Gateway. Ein Gateway wird auch als Netzübergangseinheit zwischen Netzen mit voneinander verschiedenen Signalisierungsprotokollen bezeichnet.

Die S₀-Adaptereinheit 90c erfasst den Ausfall des Internets 12 oder der Telekommunikationsanlage 14. Daraufhin arbeitet die S₀-Adaptereinheit wie ein H.323/ISDN-Gateway bzw. wie eine H.323/ISDN-Netzzugangseinheit, das bzw. die bei Vermittlungsstellenverbindungen der IP-Telefone 80 bis 84 unter Einbeziehung des Ortsnetzes 22 die Umsetzung zwischen der IP-Signalisierung gemäß H.323 und ISDN-Signalisierung (z.B. DSS1) übernimmt. Zugleich übernimmt die S₀-Adaptereinheit 90c die Rolle des Gatekeepers gegenüber den Telefonen 80 bis 84. Die IP-Telefone 80 bis 84 registrieren sich in der Notbetriebsart an der S₀-Adaptereinheit 90c als H.323 Endgeräte, bspw. nachdem auch sie den Ausfall erfasst haben.

Bei dem alternativen Ausführungsbeispiel arbeitet die S₀-Adaptereinehit 90c in der Notbetriebsart wie ein SIP/ISDN-Gateway, so dass eine Umsetzung zwischen einer SIP-Signalisierung und einer ISDN-Signalisierung in der S₀-Adaptereinheit 90c durchgeführt wird. Die S₀-Adaptereinheit übernimmt die Rolle des SIP-Registrars. Die IP-Telefone 80 bis 84 registrieren sich an der S₀-Adaptereinheit als SIP-Endgeräte.

Bei einem alternativen Ausführungsbeispiel wird das Telefon 80 in der Notbetriebsart gemäß Figur 5 wie ein Hauptanschlusstelefon betrieben, wobei sich die Netzzugangseinheit und das Telefon 80 den S₀-Bus teilen.

Auch bei dem in Figur 5 dargestellten Ausführungsbeispiel werden in der Notbetriebsart keine DSS1-Signalisierungsnachrichten über ein IP-Netz getunnelt. Die DSS1-Signalisierungsnachrichten gelangen über ein internes Bussystem des IP-Telefons 80 zum IP-Telefon 80 und werden dort in der Netzzugangseinheit umgesetzt. Jedoch lässt sich der IP-Protokollstapel 132 für die Verbindung des Telefons 80 zum IP-Netz 16 nutzen.

Figur 6 zeigt eine vierte Variante einer Notbetriebsart, bei der die Funktionen der Adaptereinheit 90 durch eine Adaptereinheit 90d erbracht werden. Gemäß der vierten Variante arbeiten die S₀-Adaptereinheit 90d und die IP-Telefone 80, 82 bzw. 84 in der Notbetriebsart wie Peer-to-peer-Endgeräte einer Peer-to-peer-Architektur.

Die S₀-Adaptereinheit 90d erfasst den Ausfall des Internet 12 bzw. der Telekommunikationsanlage 14. Daraufhin arbeitet die S₀-Adaptereinheit 90d gegenüber dem IP-Telefon 80, 82 bzw. 84 wie ein Peer-to-peer-Endgerät das bei Amtsverbindungen des IP-Telefons 80, 82 bzw. 84 als Proxy bzw. Netzübergangseinheit die Umsetzung zwischen IP-Signalisierung gemäß Peer-to-peer-Protokoll und ISDN-Protokoll, z.B. DSS1, realisiert. Auch die IP-Telefone 80 bis 84 erfassen die Störung und schalten auf eine Ersatz-IP-Adresse der Netzübergangseinheit um.

Bei einem alternativen Ausführungsbeispiel gemäß Figur 6 wird das Telefon 80 in der Notbetriebsart wie ein Hauptanschlusstelefon betrieben, wobei sich die Netzübergangseinheit und das Telefon 80 den S₀-Bus teilen.

Auch bei dem in Figur 6 dargestellten Ausführungsbeispiel werden in der Notbetriebsart keine DSS1-Signalisierungsnachrichten über ein IP-Netz getunnelt. Die DSS1 Signalisierungsnachrichten gelangen über ein internes Bussystem des IP-Telefons 80 zum IP-Telefon 80. Die DSS1-Signalisierungsnachrichten gelangen über ein internes Bussystem des IP-Telefons 80 zum IP-Telefon 80 und werden dort in der Netzübergangeseinheit umgesetzt. Jedoch lässt sich der IP-Protokollstapel 132 für die Verbindung des Telefons 80 zum IP-Netz 16 nutzen.

Zusammenfassend gilt, dass es in einem Enterprise-Netz eine Zentrale mit einem Zugang zum öffentlichen Telefonnetz und dezentral lokalisierte Filialen in anderen Ortsnetzbereichen bzw. anderen Vermittlungsstellen als die Zentrale gibt. Der Enterprise-Netzbetreiber betreibt sowohl die Telefon-Teilnehmer der Filialen als auch deren Amtsanschlüsse von der Zentralanlage aus gesteuert, indem die Signalisierung der Amtsanschlüsse der Filiale über das LAN/WAN, welches Zentrale und Filiale verbindet, getunnelt werden.

Durch die Erfindung sind Mittel gegeben, um bei einem Ausfall der Zentrale oder bei einem Ausfall des zwischen der Zentrale und der Filiale liegenden LAN/WAN einen kostengünstigen Notbetrieb zu realisieren, insbesondere hinsichtlich der Herstellung- und Servicekosten. Würde man bspw. in jeder Filiale eine Not-Telekommunikationsanlage installieren, um im Notbetrieb ohne Verbindung zur Zentrale den Filialteilnehmern lokale Amtsverbindungen zu ermöglichen, so wären insbesondere bei kleinen Filialen mit nur wenigen Telefonteilnehmern und entsprechend geringem Telefonbedarf die Betriebs- und Servicekosten um Größenordnungen höher.

Bei allen erläuterten Varianten ist die S₀-Schnittstelle der Filiale entweder ein Telekommunikationsanlagenanschluss oder ein Mehrgeräteanschluss. Alternativ wird an Stelle einer S₀-Schnittstelle in der Filiale bspw. auch eine analoge Schnittstelle mit zugehörigem analogen Signalisierungsprotokoll eingesetzt.

## Patentansprüche

1. Adaptereinheit (90) mit
einer Kanal-Sende-/Empfangseinheit (150), die Signalisierungsdaten zu einer Vermittlungsstelle eines durchschaltevermittelten Telekommunikationsnetzes (22) sendet und die Signalisierungsdaten von der Vermittlungsstelle empfängt,
einer Datenpaket-Sende-/Empfangseinheit (158), die zumindest in einer Normalbetriebsart Datenpakete in ein Datenpaketübertragungsnetz (12) sendet und die Datenpakete aus dem Datenpaketübertragungsnetz (12) empfängt,
und mit einer Dateneinfüge-/Datenentnahmeeinheit (160), die zumindest in der Normalbetriebsart von der Kanal-Empfangseinheit (150) kommende Signalisierungsdaten in Datenpakete einfügt und an die Datenpaket-Sendeeinheit (158) weitergibt und die aus von der Datenpaket-Empfangseinheit (158) empfangenen Datenpaketen Signalisierungsdaten entnimmt und an die Kanal-Sendeeinheit (150) weitergibt,
und mit einer Betriebsartumschalteinheit, die bei einer Störung auf der Seite des Datenpaketübertragungsnetzes (12) oder bei einer Störung einer an dem Datenpaketübertragungsnetz (12) betriebenen Telekommunikationsanlage in eine Notbetriebsart umschaltet, in der eine Telekommunikation über das durchschaltevermittelte Telekommunikationsnetz (22) gewährleistet ist.

2. Adaptereinheit (90a) nach Anspruch 1,
**dadurch gekennzeichnet,**
**dass** die Betriebsartumschalteinheit in der Notbetriebsart die Weitergabe der Signalisierungsdaten an eine andere Telekommunikationsanlage veranlasst als in der Normalbetriebsart,
wobei vorzugsweise in der Notbetriebsart von der anderen Telekommunikationsanlage kommende Signalisierungsdaten über die Kanal-Sendeeinheit (150) gesendet werden.

3. Adaptereinheit (90b) nach Anspruch 1,
**dadurch gekennzeichnet,**
**dass** die Betriebsartumschalteinheit in der Notbetriebsart die Weitergabe der Signalisierungsdaten an ein Teilnehmer-Endgerät (80) veranlasst,
wobei vorzugsweise in der Notbetriebsart von dem Teilnehmer-Endgerät (80) kommende Signalisierungsdaten über die Kanal-Sendeeinheit (150) gesendet werden.

4. Adaptereinheit (90c, 90d) nach Anspruch 1,
**gekennzeichnet durch** eine Protokollumsetzungseinheit die in der Notbetriebsart von der Betriebsartumschalteinheit veranlasst wird, eine Protokollumsetzung der Signalisierungsdaten in ein Signalisierungsprotokoll für ein Datenpaketübertragungsnetz und vorzugsweise auch in umkehrter Richtung auszuführen.

5. Adaptereinheit (90c) nach Anspruch 4,
**gekennzeichnet durch** eine Netzzugangseinheit, die **durch** die Betriebsartumschalteinheit in der Notbetriebsart veranlasst wird Netzzugangsfunktionen für Endgeräte eines Datenpaketübertragungsnetzes auszuführen, insbesondere eine Gatekeeperfunktion gemäß einem Protokoll der H.323-Protokollfamilie oder eine SIP-Registrarfunktion gemäß SIP-Protokoll oder einem darauf aufbauenden Protokoll.

6. Adaptereinheit (90d) nach Anspruch 4,
**gekennzeichnet durch** eine Endgeräteeinheit, die **durch** die Betriebsartumschalteinheit in der Notbetriebsart veranlasst wird die Funktion eines Endgerätes in Endgerät-Endgerät-Verbindungen eines Datenpaketübertragungsnetzes auszuführen, insbesondere in Peer-to-Peer-Verbindungen.

7. Adaptereinheit (90) nach einem der Ansprüche 1 bis 6,
**gekennzeichnet durch** mindestens eines der folgenden Merkmale,
im Datenpaketübertragungsnetz (12) werden die Datenpakete gemäß Internetprotokoll übertragen,
das durchschaltevermittelte Telekommunikationsnetz (20, 22) ist ein Festnetz oder ein Mobilfunknetz,
die Signalisierungsdaten erfüllen ein Signalisierungsprotokoll für Vermittlungsstellenleitungen zwischen einer Vermittlungsstelle und einem Endgerät oder zwischen einer Vermittlungsstelle und einer Telekommunikationsanlage (12), die zu oder von mehreren an der Telekommunikationsanlage (12) betriebenen Endgeräten (60 bis 64) vermittelt,
wobei das Signalisierungsprotokoll vorzugsweise das Protokoll DSS1 oder ein darauf aufbauendes Protokoll ist.

## Claims

1. Adapter unit (90) including
a channel send/receive unit (150) which sends signalling data to an exchange of a circuit-switched telecommunications network (22) and receives signalling data from the exchange,
a data packet send/receive unit (158) which at least in a normal operating mode sends data packets into a data packet transfer network (12) and receives data packets from the data packet transfer network (12),
and a data insertion/extraction unit (160) which at least in the normal operating mode inserts signalling data coming from the channel receive unit (150) into data packets and forwards them to the data packet send unit (158) and which extracts signalling data from data packets that are received from the data packet receive unit (158) and forwards it to the channel send unit (150),
and an operating mode switchover unit which, in the event of a fault on the side of the data packet transfer network (12) or in the event of a fault in a telecommunication system operating on the data packet transfer network (12), switches over into an emergency operating mode in which telecommunication via the circuit-switched telecommunications network (22) is ensured.

2. Adapter unit (90a) according to claim 1,
**characterised in that**
in the emergency operating mode the operating mode switchover unit entrusts the forwarding of the signalling data to a different telecommunication system than in the normal operating mode,
wherein in the emergency operating mode signalling data coming from the different telecommunication system is preferably sent via the channel send unit (150).

3. Adapter unit (90b) according to claim 1,
**characterised in that**
in the emergency operating mode the operating mode switchover unit entrusts the forwarding of the signalling data to a subscriber terminal (80),
wherein in the emergency operating mode signalling data coming from the subscriber terminal (80) is preferably sent via the channel send unit (150).

4. Adapter unit (90c, 90d) according to claim 1,
**characterised by** a protocol conversion unit which in the emergency operating mode is entrusted by the operating mode switchover unit to perform a protocol conversion of the signalling data into a signalling protocol for a data packet transfer network and preferably also vice versa.

5. Adapter unit (90c) according to claim 4,
**characterised by** a network access unit which in the emergency operating mode is entrusted by the operating mode switchover unit to perform network access functions for terminals of a data packet transfer network, in particular a gatekeeper function in accordance with a protocol of the H.323 protocol family or a SIP registrar function in accordance with a SIP protocol or a protocol which is based thereupon.

6. Adapter unit (90d) according to claim 4,
**characterised by** a terminal unit which in the emergency operating mode is entrusted by the operating mode switchover unit to perform the function of a terminal in terminal-to-terminal connections of a data packet transfer network, in particular in peer-to-peer connections.

7. Adapter unit (90) according to one of claims 1 to 6,
**characterised by** at least one of the following features,
the data packets are transferred in accordance with an Internet protocol in the data packet transfer network (12), the circuit-switched telecommunications network (20, 22) is a fixed network or a mobile radio network,
the signalling data complies with a signalling protocol for exchange lines between an exchange and a terminal or between an exchange and a telecommunication system (12) which switches to or from a plurality of terminals (60 to 64) which are operated at the telecommunication system (12),
wherein the signalling protocol is preferably the protocol DSS1 or a protocol which is based thereupon.

## Revendications

1. Unité adaptatrice (90) avec
- une unité d'émission / de réception de canaux (150) qui émet des données de signalisation vers un centre de commutation d'un réseau de télécommunications (22) à commutation de circuits et qui reçoit des données de signalisation du centre de commutation,
- une unité d'émission / de réception de paquets de données (158) qui, du moins dans un mode de fonctionnement normal, envoie des paquets de données à un réseau de transmission de paquets de données (12) et qui reçoit des paquets de données venant du réseau de transmission de paquets de données (12),
- une unité d'insertion de données / de prélèvement de données (160) qui, du moins dans le mode de fonctionnement normal, insère dans des paquets de données des données de signalisation venant de l'unité de réception de canaux (150) et les retransmet à l'unité d'émission de paquets de données (158) et qui prélève des données de signalisation de paquets de données reçus par l'unité de réception de paquets de données (158) et les retransmet à l'unité d'émission de canaux (150) et
- une unité de commutation des modes de fonctionnement qui, en cas de perturbation du côté du réseau de transmission de paquets de données (12) ou de perturbation d'une installation de télécommunications fonctionnant sur le réseau de transmission de paquets de données (12), commute sur un mode de fonctionnement de secours dans lequel est assurée une télécommunication via le réseau de télécommunications à commutation de circuits (22).

2. Unité adaptatrice (90a) selon la revendication 1, **caractérisée en ce que** l'unité de commutation des modes de fonctionnement provoque, dans le mode de fonctionnement de secours, la retransmission des données de signalisation à une installation de télécommunications autre que dans le mode de fonctionnement normal, des données de signalisation venant de l'autre installation de télécommunications étant émises, de préférence dans le mode de fonctionnement de secours, via l'unité d'émission de canaux (150).

3. Unité adaptatrice (90b) selon la revendication 1, **caractérisée en ce que** l'unité de commutation des modes de fonctionnement provoque, dans le mode de fonctionnement de secours, la retransmission des données de signalisation à un terminal d'abonné (80), des données de signalisation venant du terminal d'abonné (80) étant émises, de préférence dans le mode de fonctionnement de secours, via l'unité d'émission de canaux (150).

4. Unité adaptatrice (90c, 90d) selon la revendication 1, **caractérisée par** une unité de conversion de protocole à laquelle l'unité de commutation des modes de fonctionnement, dans le mode de fonctionnement de secours, fait exécuter une conversion de protocole des données de signalisation en un protocole de signalisation pour un réseau de transmission de paquets de données ainsi que, de préférence, aussi en sens inverse.

5. Unité adaptatrice (90c) selon la revendication 4, **caractérisée par** une unité d'accès au réseau à laquelle l'unité de commutation des modes de fonctionnement, dans le mode de fonctionnement de secours, fait exécuter des fonctions d'accès au réseau pour des terminaux d'un réseau de transmission de paquets de données, en particulier une fonction de portier (gatekeeper) selon un protocole de la famille de protocoles H.323 ou une fonction de registraire SIP selon le protocole SIP ou un protocole basé dessus.

6. Unité adaptatrice (90d) selon la revendication 4, **caractérisée par** une unité de terminal à laquelle l'unité de commutation des modes de fonctionnement, dans le mode de fonctionnement de secours, fait exécuter la fonction d'un terminal dans des liaisons de terminal à terminal d'un réseau de transmission de paquets de données, en particulier dans des liaisons peer to peer.

7. Unité adaptatrice (90) selon l'une des revendications 1 à 6, **caractérisée par** au moins l'une des caractéristiques suivantes:
- dans le réseau de transmission de paquets de données (12), les paquets de données sont transmis selon le protocole internet;
- le réseau de télécommunications à commutation de circuits (20, 22) est un réseau fixe ou un réseau radio mobile;
- les données de signalisation satisfont un protocole de signalisation pour des lignes de centres de commutation entre un centre de commutation et un terminal ou entre un centre de commutation et une installation de télécommunications (12) qui commute vers ou depuis plusieurs terminaux (60 à 64) exploités sur l'installation de télécommunications (12),
- le protocole de signalisation étant de préférence le protocole DSS1 ou un protocole basé dessus.
